# EUROPÄISCHE PATENTSCHRIFT

(11) **EP 0 470 933 B1**
(45) Veröffentlichungstag und Bekanntmachung des Hinweises auf die Patenterteilung: **16.10.1996**
(21) Anmeldenummer: 91810608.9
(22) Anmeldetag: 31.07.1991
(51) Int. Cl.: C08L 61/32, C08L 61/24, C08L 61/28, C08G 12/42, C09D 5/03, C08J 3/12, C08L 69/00

(54) **Zusammensetzungen enthaltend Aminoplastharze und feste kolloidale Kondensationspolymere**
Compositions containing aminoplast resins and solid, colloidal condensation polymers
Compositions à partir de résines aminoplastes et polymères de condensation solides colloidales ainsi obtenus

(30) Priorität: 09.08.1990 CH 2590/90
(43) Veröffentlichungstag der Anmeldung: 12.02.1992
(73) Patentinhaber: CIBA-GEIGY AG, 4002 Basel (CH)
(72) Erfinder: Renner, Alfred, Dr., CH-3286 Muntelier (CH)

(56) Entgegenhaltungen:
- DE-A- 1 495 379
- DE-A- 2 537 949
- DIE MAKROMOLEKULARE CHEMIE Band 149, 29. Oktober 1971, Seiten 1-27; A.RENNER: "Kondensationspolymere aus Harnstoff und Formaldehyd mit grosser spezifisher Oberfläche"
- DIE MAKROMOLEKULARE CHEMIE Band 120, 30. Dezember 1968, Seiten 68-86; A. RENNER: "Hochdisperse, vernetzte Kondensationspolymere aus Melamin und Formaldehyd"

## Beschreibung

Die vorliegende Erfindung betrifft Zusammensetzungen enthaltend Aminoplastharze und feste kolloidale Kondensationspolymere aus Harnstoff oder Melamin und Formaldehyd und die Verwendung dieser Zusammensetzungen.

Aminoplastharzzusammensetzungen für mannigfaltige Anwendungen und Technologien sind dem Fachmann allgemein bekannt. Der Einsatz flüssiger Aminoplastharze ist jedoch für bestimmte Anwendungen, beispielsweise in der Pulverlack- und Pressmassentechnologie, nicht möglich oder mit erheblichen Schwierigkeiten verbunden. Beispielsweise kann bei den am meisten verwendeten Pulverlacken aus Hydroxylgruppen-terminierten Polyestem und verkappten Isocyanaten während des Einbrennens ε-Caprolactam abgespalten werden, das in den Pulverbeschichtungsanlagen auskristallisiert.

Feste kolloidale Kondensationspolymere aus Harnstoff oder Melamin und Formaldehyd sind dem Fachmann beispielsweise aus Makromol. Chem. **120**, 68 (1968) und aus Makromol. Chem. **149**, 1 (1971) bekannt. Diese Kondensationspolymere finden zum Beispiel als Weisspigmente bei der Papierherstellung und als Verstärkungen von Elastomeren Verwendung. Weiterhin eignen sich die Polymeren für die Abwasserreinigung und für Verwendungen in der Agrarchemie.

In der DE-A-1 495 379 wird ein Vefahren zur Herstellung von feinteiligen Kondensationsprodukten aus Melamin und Formaldehyd beschrieben, wobei die erhaltenen Kondensationsprodukte eine innere Oberfläche von mher als 10 m²/g aufweisen und vorzugsweise als Füllstoffe oder Verstärkungsmittel eingesetzt werden.

In der DE-A-2 537 949 werden hitzehärtende Formmassen aus einem härtbaren Aminoplastharz und mindestens teilweise aus einem gehärteten Aminoplastharz als Füllstoff offenbart, wobei das Aminoplastharz eine Oberfläche von kleiner als 10 m²/g aufweist. Soweit aus diesem Formmassen Pulver hergestellt werden, werden diese durch Mahlen in einer Mühle erhalten.

Es wurde nun gefunden, dass flüssige und halbfeste, veretherte Aminoplastharze mit Hilfe von kolloidalen Kondensationspolymeren aus Harnstoff oder Melamin und Formaldehyd in frei fliessende, nicht zusammenbackende Pulver umgewandelt werden können.

Gegenstand der vorliegenden Erfindung sind daher pulverförmige, frei fliessende Zusammensetzungen enthaltend
A) nicht feste, veretherte Aminoplastharze und
B) feste kolloidale Kondensationspolymere aus Harnstoff oder Melamin und Formaldehyd mit einem Porenvolumen von grösser als 1 cm³/g, gemessen durch Ölabsorpsion, und einer spezifischen Oberfläche von grösser als 5 m²/g, gemessen nach des BET-Methode, wobei das Gewichtsverhältnis von Komponente A zu Komponente B 1,8-0,4:1 ist.

Bei den nicht festen, veretherten Aminoplastharzen, die in den erfindungsgemässen Zusammensetzungen nicht Verwendung finden, handelt es sich beispielsweise um Verbindungen auf der Basis von Harnstoff, Thioharnstoff, Melamin, Acetoguanamin (2,6-Diamino-4-methyl-1,3,5-triazin), Benzoguanamin (2,6-Diamino-4-phenyl-1,3,5-tri-azin), Glykol-uril (Tetrahydroimidazo[4,5-]imidazol-2,5-(1H,3H)-dion) oder Triaceton-di-harnstoff und Formaldehyd, die mit C₁-C₈-Alkoholen verethert sind.

Diese Alkohole sind beispielsweise Ethanol, 1-Propanol, 2-Propanol, 1-Butanol, 2-Butanol, tert.-Butanol, Pentanol, Hexanol, Heptanol, Octanol und insbesondere Methanol.

Bevorzugt sind Zusammensetzungen, in denen das Aminoplastharz ein C₁-C₈-Alkoxy-methyl-Melamin, -Harnstoff oder -Benzoguanamin ist.

Ganz besonders bevorzugt ist Hexamethoxymethyl-Melamin [2,4,6-Tris-(dimethoxymethylamino)-s-triazin].

Falls gewünscht, kann eine Mischung von Aminoplastharzen in den erfindungsgemässen Zusammensetzungen verwendet werden.

Die festen kolloidalen Kondensationspolymere aus Harnstoff oder Melamin und Formaldehyd mit einem Porenvolumen von grösser als 1 cm³/g und einer spezifischen Oberfläche von grösser als 5 m²/g, die in den erfindungsgemässen Zusammensetzungen Verwendung finden, und deren Herstellung sind in Makromol. Chem. **120**, 68 (1968) und in Makromol. Chem. **149**, 1 (1971) beschrieben.

Bevorzugt sind solche Kondensationspolymere, die ein Porenvolumen von grösser als 2 cm³/g haben.

Besonders bevorzugt sind Harnstoff-Formaldehyd-Kondensationspolymere.

Methoden zur Bestimmung des Porenvolumens und der spezifischen Oberfläche sind dem Fachmann allgemein bekannt. So kann das Porenvolumen beispielweise mit der Quecksilber-Porosimetrie bestimmt werden. Die spezifische Oberfläche kann beispielsweise mit einer modifizierten BET-Adsorption von Stickstoff nach der Methode von Haul und Dümbgen (Chem.-Ing.-Techn. **35**, 586 (1963)) ermittelt werden.

Bevorzugt sind Zusammensetzungen, in denen das Gewichtsverhältnis von Komponente A zu Komponente B 1,6 - 0,8 : 1 ist.

Die Herstellung der erfindungsgemässen Zusammensetzungen erfolgt im allgemeinen so, dass die Komponente A in die aufgewirbelte oder gerührte Komponente B eingespritzt, eingedüst oder eingetropft wird. Bevorzugt wird die Komponente A in einer solchen relativen Menge eingetragen, dass die Erweichungstemperatur der erfindungsgemässen Zusammensetzungen oberhalb von 100 °C verbleibt.

Ist die Viskosität der Komponente A für die genannten Eintragsarten zu hoch, so kann diese mit einem geeigneten Lösungsmittel, beispielsweise aliphatischen Alkoholen, insbesondere n-Butanol, verdünnt werden, welches während des Eintrags, insbesondere im Vakuum, entfernt wird.

Es war nicht vorauszusehen, dass gemäss vorliegender Erfindung frei fliessende, nicht klebende und nicht zusammenbackende Pulver erhalten werden, welche die Verwendung von an sich flüssigen Aminoplastharzen beispielsweise in der Pulverlack- und Pressmassentechnologie sowie die Verwendung als Klebstoffe und Giessharze gestattet.

So können beispielsweise Pulverlacke formuliert werden, die die erfindungsgemässen Zusammensetzungen, hydroxyl-terminierte Polyester, (latent) saure Härtungskatalysatoren und gegebenfalls übliche Zusätze, wie Pigmente (z.B. TiO₂), Verlaufsmittel, etc. enthalten. Härtungskatalysatoren sind bevorzugt Ester der p-Toluolsulfonsäure, die gegebenfalls mit der oben definierten Komponente B verfestigt worden ist. Besonders bevorzugt ist 1,4-Di-p-toluolsulfonoxy-butan als Härtungskatalysator.

Es werden Lackfilme mit hoher Härte und Schlagzähigkeit erhalten, die ausserdem eine ausgezeichnete Wetterbeständigkeit haben. Beim Einbrennen der Pulverlacke kommt es zu einer geringfügigen Abspaltung von Methanol. Es war nicht vorauszusehen, dass trotz dieser Alkoholabspaltung beim Einbrennen einwandfreie, blasen- und pinhole-freie, hartelastische und hochglänzende Lackfilme entstehen.

Gegenstand der vorliegenden Erfindung ist auch ein Verfahren zur Herstellung gehärteter Produkte unter Verwendung der erfindungsgemässen Zusammensetzungen.

Gegenstand der vorliegenden Erfindung ist weiterhin die Verwendung der erfindungsgemässen Zusammensetzungen für den Oberflächenschutz.

In den folgenden Beispielen sind einige bevorzugte Ausführungsformen der vorliegenden Erfindung beschrieben.

### I. Herstellung der verfestigten Aminoplastharze

### Beispiel 1:

In einem IKA-Laborreaktor RW-20 der Fa. Jahnke & Kunkel (BRD) werden 30 g eines bei 120 °C vorgetrockneten Harnstoff-Formaldehyd-Kondensationspolymeren (Pergopak^{®} M 2; Fa. Martinswerk, BRD) mit 135 rpm gerührt. In dieses fluide Pulver werden im Verlauf von 10 min 30 g Hexamethoxymethyl-Melamin eingetropft Es werden 60 g eines weissen, frei fliessenden Pulvers erhalten, welches einen Stickstoffgehalt von 27,7 % und einen Erweichungspunkt (gemessen auf einer Koflerbank) von 225 °C hat.

### Beispiel 2:

In der gleichen Apparatur wie in Beispiel 1 werden 30 g Pergopak® M 2 und 45 g Hexamethoxymethyl-Melamin vermischt. Das weisse, frei fliessenden Pulver enthält 26,52 % Stickstoff und erweicht zwischen 190 und 200 °C (gemessen auf einer Koflerbank).

### Beispiel 3 :

147 g eines mit n-Butanol veretherten Melamin-Formaldehydharzes mit einem Veretherungsgrad von 35 %, das als 68 %ige Lösung in n-Butanol vorliegt, werden mit 700 ml Butanol verdünnt. Diese Lösung wird in einen Rotationsverdampfer, der 67 g Pergopak® M enthält und dessen Rundkolben bei 140 °C rotiert, eingespritzt. Der Eintrag erfolgt in dem Mass, wie das Lösungsmittel abdestilliert (p = 2000 Pa). Danach wird der Kolbeninhalt noch 1 Stunde rotiert. Anschliessend werden 161,8 g eines weissen, frei fliessenden Pulvers ausgetragen, welches einen Stickstoffgehalt von 28,1 % und einen Erweichungspunkt (gemessen auf einer Koflerbank) von 275 °C hat.

### Beispiel 4:

Wie in Beispiel 3 beschrieben, werden 104 g Methylolmelamin-butylether (72 %ig in Butanol, Veretherungsgrad von 42,5 %), das mit 500 ml n-Butanol verdünnt ist, bei 140 °C/2000 Pa in den Rotationsverdampferder, der 67 g Pergopak® M enthält, eingespritzt. Anschliessend werden 146,85 g eines weissen, frei fliessenden Pulvers ausgetragen, welches einen Stickstoffgehalt von 26,3 % und einen Erweichungspunkt (gemessen auf einer Koflerbank) von 275 °C hat.

### Beispiel 5:

Wie in Beispiel 3 beschrieben, werden 81,0 g eines kolloidalen Melamin-Formaldehydpolymeren (spezifische Oberfläche: 253 m²/g) mit 81,0 g Methylolmelamin-butylether (72 %ig in n-Butanol, Veretherungsgrad von 42,5 %), das mit 700 ml n-Butanol verdünnt ist, imprägniert. Es werden 139,3 g eines weissen, frei fliessenden Pulvers erhalten, das einen Stickstoffgehalt von 33,7 % und einen Erweichungspunkt (gemessen auf einer Koflerbank) von 250 °C hat.

### Beispiel 6:

Wie in Beispiel 3 beschrieben, werden 75,0 g Pergopak® M mit 119 g butyliertem Harnstoff-Formaldehydharz, das mit 800 ml n-Butanol verdünnt ist, imprägniert. Es werden 173,0 g eines weissen, frei fliessenden Pulvers erhalten, das einen Stickstoffgehalt von 22,7 % und einen Erweichungspunkt (gemessen auf einer Koflerbank) von 275 °C hat.

### Beispiel 7:

Wie in Beispiel 3 beschrieben, werden 67,0 g Pergopak® M mit 151 g butyliertem Benzoguanamin-Formaldehydharz (66 %ig in Butanol, Veretherungsgrad von 22,75 %), das mit 200 ml n-Butanol verdünnt ist, imprägniert. Es werden 166,2 g eines weissen, frei fliessenden Pulvers erhalten, das einen Stickstoffgehalt von 26,2 % und einen Erweichungspunkt (gemessen auf einer Koflerbank) von 275-300 °C hat.

### II. Anwendungsbeispiele

### Beispiel 8:

Zur Herstellung eines Pulverlackes werden folgende Komponenten vermischt:

| | |
|---|---|
| 63,9 g | fein gepulverter, hydroxylterminierter Polyester (Arakote® 3109 der Fa. Ciba-Geigy Corp.) |
| 6,1 g | Pulver gemäss Beispiel 2 |
| 26,77 g | Titadioxid |
| 1,5 g | Verlaufsmittel |
| 1,5 g | Benzoin |
| 0,23 g | 1,4-Di-p-toluolsulfoxy-butan |

Diese Mischung wird auf einem geheizten Differentialwalzwerk homogenisiert, zerkleinert und dann in einer Stiftmühle fein gemahlen. Anschliessend wird ein Stahlblech durch elektrostatisches Sprühen beschichtet. Nach dem Einbrennen während 20 Minuten bei 190 °C wird ein einwandfreier, glatter, weisser Lackfilm von 50 µm Dicke erhalten. Folgende

Eigenschaften werden gemessen:

| | |
|---|---|
| Bleistifthärte: | H |
| Schlagzähigkeit: (Rückseite) | 184 cm·kg |
| Glanz bei 60°: | 93 % |
| Reibtest mit Butanon-2: (per Hand) | >200 Zyklen |
| Gelierzeit: | 282 s |

### Beispiel 9:

Zur Herstellung eines Pulverlackes werden folgende Komponenten vermischt:

| | |
|---|---|
| 57,5 g | fein gepulverter, hydroxylterminierter Polyester (Arakote® 3109 der Fa. Ciba-Geigy Corp.) |
| 12,5 g | Pulver gemäss Beispiel 7 |
| 26,7 g | Titandioxid |
| 1,5 g | Verlaufsmittel |
| 1,5 g | Benzoin |
| 0,3 g | 1,4-Di-p-toluolsulfoxy-butan |

Diese Mischung wird auf einem geheizten Differentialwalzwerk homogenisiert, zerkleinert und dann in einer Stiftmühle fein gemahlen. Anschliessend wird ein Stahlblech durch elektrostatisches Sprühen beschichtet. Nach dem Einbrennen während 20 Minuten bei 200 °C wird ein einwandfreier, glatter, weisser Lackfilm von 50 µm Dicke erhalten. Folgende Eigenschaften werden gemessen:

| | |
|---|---|
| Bleistifthärte: | H |
| Schlagzähigkeit: (Rückseite) | <12 cm·kg |
| Glanz bei 60°: | 93 % |
| Reibtest mit Butanon-2: (per Hand) | 57 Zyklen |
| Gelierzeit: | 267 s |

## Patentansprüche

1. Pulverförmige, frei fliessende Zusammensetzungen enthaltend
A) nicht feste, veretherte Aminoplastharze und
B) feste kolloidale Kondensationspolymere aus Harnstoff oder Melamin und Formaldehyd mit einem Porenvolumen von grösser als 1 cm³/g gemessen durch Ölabsorption, und einer spezifischen Oberfläche von grösser als 5 m²/g, gemessen nach der BET-Methode, wobei das Gewichtsverhältnis von Komponente A zu Komponente B 1,8-0,4:1 ist.

2. Zusammensetzungen gemäss Anspruch 1, dadurch gekennzeichnet, dass Komponente A ein C₁-C₈-Alkoxymethyl-Melamin, -Harnstoff oder -Benzoguanamin ist.

3. Zusammensetzungen gemäss Anspruch 1, dadurch gekennzeichnet, dass Komponente B ein Porenvolumen von grösser als 2 cm³/g hat.

4. Zusammensetzungen gemäss Anspruch 1, dadurch gekennzeichnet, dass die Komponente B ein Harnstoff-Formaldehyd-Kondensationspolymer ist.

5. Zusammensetzungen gemäss Anspruch 1, dadurch gekennzeichnet, dass das Gewichtsverhältnis von Komponente A zu Komponente B 1,6 - 0,8: 1 ist.

6. Verwendung der Zusammensetzungen gemäss Anspruch 1 für den Oberflächenschutz.

## Claims

1. A free-flowing powder composition comprising
A) non-solid etherified amino resins and
B) solid colloidal condensation polymers of urea or melamine and formaldehyde having a pore volume greater than 1 cm³/g, measured by oil absorption, and a specific surface area greater than 5 m²/g, measured by the BET method, where the weight ratio of component A to component B is 1.8 - 0.4 : 1.

2. A composition according to claim 1, wherein component A is a C₁-C₈alkoxymethyl-melamine, C₁-C₈alkoxymethyl-urea or C₁-C₈alkoxymethyl-benzoguanamine.

3. A composition according to claim 1, wherein component B has a pore volume greater than 2 cm³/g.

4. A composition according to claim 1, wherein component B is a urea/formaldehyde condensation polymer.

5. A composition according to claim 1, wherein the weight ratio of component A to component B is 1.6 - 0.8 : 1.

6. Use of a composition according to claim 1 for surface protection.

## Revendications

1. Compositions pulvérulentes s'écoulant librement, contenant
A) des résines aminoplastes éthérifiées non solides et
B) des polymères de condensation colloïdaux solides obtenus à partir d'urée ou de mélamine et de formaldéhyde, ayant un volume de pores, mesuré par absorption d'huile, supérieur à 1 cm³/g et une surface spécifique, mesurée selon la méthode BET, supérieure à 5 m²/g, le rapport en masse du constituant A au constituant B étant de 1,8-0,4 : 1.

2. Compositions selon la revendication 1, caractérisées en ce que le constituant A est une (alcoxy en C₁-C₈)méthyl-mélamine, -urée ou -benzoguanamine.

3. Compositions selon la revendication 1, caractérisées en ce que le constituant B a un volume de pores supérieur à 2 cm³/g.

4. Compositions selon la revendication 1, caractérisées en ce que le constituant B est un polymère de condensation urée-formaldéhyde.

5. Compositions selon la revendication 1, caractérisées en ce que le rapport en masse du constituant A au constituant B est de 1,6-0,8 : 1.

6. Utilisation des compositions selon la revendication 1 pour la protection de surfaces.
